# EUROPEAN PATENT SPECIFICATION

(11) **EP 3 689 759 B1**
(45) Date of publication and mention of the grant of the patent: **16.06.2021**
(21) Application number: 19217824.2
(22) Date of filing: 19.12.2019
(51) Int. Cl.: B65B 9/04, B65B 11/52, B65B 35/24, B65B 55/02, B65B 61/28, B65G 11/00, B65G 11/02, B65G 47/44, B65G 47/66

(54) **HIGH-SPEED BLISTER PACK MACHINE INTEGRATED WITH BOX CARTON MACHINE**
MIT BOXKARTONMASCHINE INTEGRIERTE HOCHGESCHWINDIGKEITSBLISTERPACKMASCHINE
MACHINE D'EMBALLAGE À BLISTER À GRANDE VITESSE INTÉGRÉE AVEC MACHINE DE FORMATION DE BOÎTES EN CARTON

(30) Priority: 22.12.2018 CN 201811575804
(43) Date of publication of application: 05.08.2020
(73) Proprietor: ZHEJIANG HOPING MACHINERY CO., LTD., Wenzhou City, Zhejiang (CN)
(72) Inventor: YANG, Yifu, Wenzhou City, Zhejiang (CN); LI, Wenlei, Wenzhou City, Zhejiang (CN); LI, Junjie, Wenzhou City, Zhejiang (CN)
(74) Representative: Kayahan, Senem

(56) References cited:
- EP-A1- 0 899 195
- CN-A- 103 935 551
- JP-Y1- S4 742 367
- US-A- 5 081 816

## Description

### TECHNICAL FIELD

The present disclosure relates to a blister pack machine integrated with a box carton machine, which can be used for making blister packs and a box carton blister pack (s. e.g. CN 103 935 551).

### BACKGROUND

The high-speed blister pack machine integrated with the box carton machine includes a blister packing machine and a box carton machine. The blister packing machine is for forming and packaging blister packs, and the box carton machine is used to put the blister packs into boxes for package blister pack. After the blister packs are packaged and trimmed by the blanking device, the blister packs enter one by one into the discharging grid conveying device. Then, the blister packs on the discharging grid conveying device are transferred to the feeding grid conveying device through a blister pack transferring manipulator. Finally, the blister packs are conveyed to the box carton machine by the feeding grid conveying device for the box carton. In order to make the blister packs in the bioclean environment when being filled with capsules in foreign practices, the joint transmission generally passes through a clean area and a non-clean area. The clean area is isolated from the non-clean area by a pressure difference between the areas. However, there still exists a risk that the bacteria in the non-clean area may be brought into the clean area through the conveyor belt.

### SUMMARY

In view of the shortcomings of the prior art, the present invention provides a high-speed blister pack machine integrated with a box carton machine, which can effectively prevent the bacteria in the non-clean area from entering the clean area through the conveyor belt.

The high-speed blister pack machine integrated with the box carton machine includes a blister packing machine and a box carton machine. The blister packing machine is connected to a discharging grid conveying device. The box carton machine is connected to a feeding grid conveying device. The continuous transmission between the discharging grid conveying device and the feeding grid conveying device is achieved through a blister pack transferring manipulator. The discharging grid conveying device includes a clean area grid conveying device, located in a clean area, and a non-clean area grid conveying device, located in a non-clean area. The position of the clean area grid conveying device is higher than the position of the non-clean area grid conveying device. The front end of the clean area grid conveying device and the rear end of the non-clean area grid conveying device are connected to each other through a slideway to achieve a continuous transmission. The clean area and the non-clean area are separated by a partition wall. The partition wall has a window, and the slideway passes through the window.

The air pressure of the clean area is higher than the air pressure of the non-clean area.

A return guide channel is arranged in front of the non-clean area grid conveying device. A return conveying belt is arranged under the return guide channel, and a sample collecting bucket is arranged at the discharging end of the return conveying belt.

The discharging grid conveying device has a plurality of conveying channels, and each conveying channel includes a grid conveying chain hook, a driving chain wheel and a driven chain wheel. The grid conveying chain hook winds around the driving chain wheel and the driven chain wheel, and the driving chain wheel is connected to a drive of a conveying power source.

The discharging grid conveying device has three conveying channels, wherein the driving chain wheel and the driven chain wheel of the inner conveying channel are installed on an inner housing. The driving chain wheel and the driven chain wheel of the middle conveying channel are installed on a middle housing. The driving chain wheel and the driven chain wheel of the outer conveying channel are installed on an outer housing. An adjusting screw rod is installed on the middle housing, and two ends of the adjusting screw rod are connected to the inner housing and the outer housing through screw threads, respectively. Two partition mounting frames, capable of being moved and adjusted relative to each other, are installed on the left and right sides of the middle housing. A middle left partition and a middle right partition are installed on the partition mounting frames, and the middle conveying channel is located between the middle left partition and the middle right partition.

The non-clean area grid conveying device and the feeding grid conveying device are arranged side by side. The blister pack transferring manipulator is arranged on one side of the feeding grid conveying device, and the blister pack transferring manipulator includes a base, a suction nozzle and a suction nozzle bracket. The suction nozzle bracket is hinged with the front end of the up and down lift arm, and the up and down lift arm is hinged on the front and rear transfer arm. The lower end of the front and rear transfer arm is rotatably installed on a sliding base. An up and down lift power source and a front and rear transfer power source are installed on the sliding base. The front and rear transfer power source is connected to a drive of the front and rear transfer arm. The up and down lift power source is connected to a drive of the lower end of a lift pull rod. The upper end of the lift pull rod is hinged with the back end of the up and down lift arm. A slide rail arranged in the left and right direction is installed on the base, and the sliding base is slidably arranged on the slide rail. The sliding base is connected to a drive of a horizontal transfer power source, driving the sliding base to move on the slide rail. The sliding base is provided with a horizontal holding assembly to keep the suction nozzle bracket horizontal.

The horizontal holding assembly includes a horizontal transverse pull rod, a triangular cantilever, a horizontal vertical pull rod, an upper pull rod support and a lower pull rod support. The triangular cantilever is hinged with the front and rear transfer arm, and one corner of the triangular cantilever is hinged with the rear end of the horizontal transverse pull rod. The upper pull rod support is arranged on the suction nozzle bracket, and the front end of the horizontal transverse pull rod is hinged with the upper pull rod support. Another corner of the triangular cantilever is hinged with the upper end of the horizontal vertical pull rod. The lower pull rod support is installed on the sliding base, and the lower end of the horizontal vertical pull rod is hinged with the lower pull rod support.

The up and down lift power source is connected to a drive of a triangular connecting arm, one corner of the triangular connecting arm is hinged with the lower end of the lift pull rod, and another corner of the triangular connecting arm is connected to a telescopic member driving the lift pull rod to pull down.

The base is provided with a synchronous belt assembly. The synchronous belt assembly includes a driven synchronous pulley, a driving synchronous pulley and a synchronous belt. The synchronous belt winds around the driven synchronous pulley and the driving synchronous pulley. The synchronous belt is connected to the sliding base. The driving synchronous pulley is connected to the drive of the horizontal transfer power source.

The up and down lift power source, the front and rear transfer power source and the horizontal transfer power source are all servo motor reducer combinations.

According to the high-speed blister pack machine integrated with the box carton machine of the present invention, separate grid conveying devices are respectively arranged in the clean area and the non-clean area. The material transition is realized by the height difference of the two grid conveying devices, thereby preventing the bacteria in the non-clean area from entering the clean area through the conveying belt, and preventing the bacteria in the non-clean area from entering the clean area through the air by the difference in air pressure. Through these two aspects, the problem of the bacteria from the non-clean area entering into the clean area is completely solved.

### BRIEF DESCRIPTION OF THE DRAWINGS

FIG. 1 is a diagram showing the overall structure of the integrated machine according to the present invention;
FIG. 2 is a perspective view of the discharging grid conveying device and the feeding grid conveying device according to the present invention;
FIG. 3 is a perspective view of the discharging grid conveying device;
FIG. 4 is the front view of the discharging grid conveying device;
FIG. 5 is an enlarged view of the part A in FIG. 4;
FIG. 6 is an explosive diagram showing the structures of the three channels of the clean area grid conveying device;
FIG. 7 is an enlarged view of the part B in FIG. 6;
FIG. 8 is a diagram showing the working condition of the blister pack transferring manipulator;
FIG. 9 is a perspective view of the blister pack transferring manipulator;
FIG. 10 is the front view of the blister pack transferring manipulator; and
FIG. 11 is the side view of the blister pack transferring manipulator.

### DETAILED DESCRIPTION OF THE EMBODIMENTS

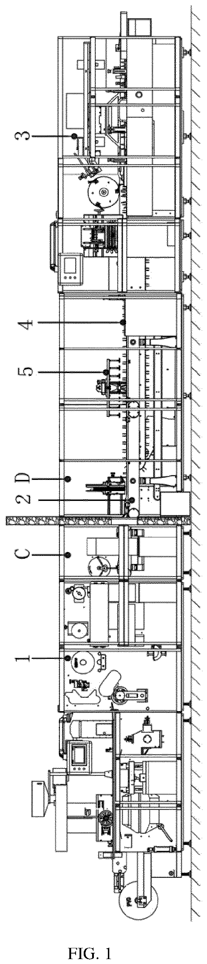

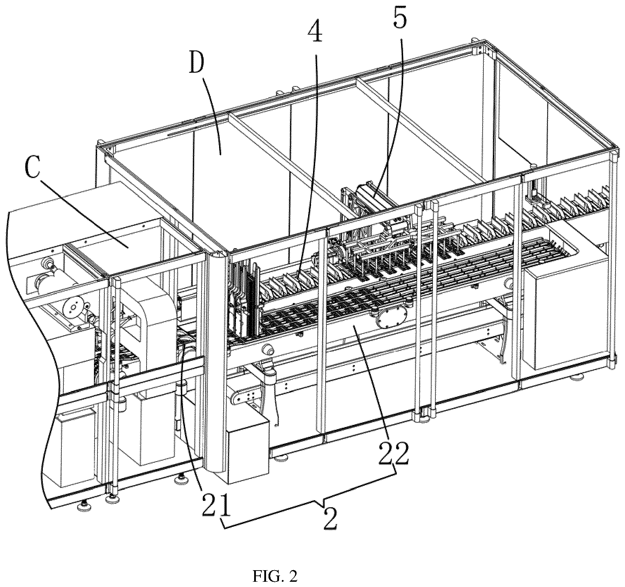

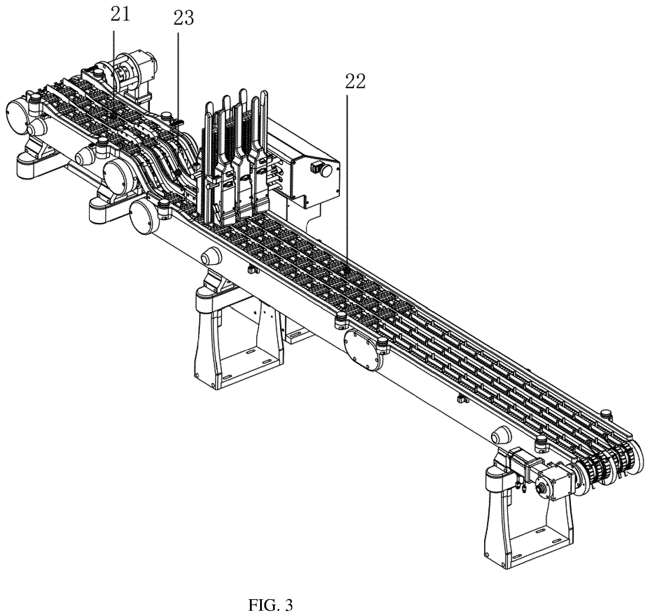

As shown in FIG. 1, the high-speed blister pack machine integrated with box carton machine includes the blister packing machine 1 and the box carton machine 3. The blister packing machine 1 is connected to the discharging grid conveying device 2. The box carton machine 3 is connected to the feeding grid conveying device 4. The continuous transmission between the discharging grid conveying device 2 and the feeding grid conveying device 4 is realized through the blister pack transferring manipulator 5. As shown in FIG. 2 and FIG. 3, the discharging grid conveying device 2 passes through the clean area C and the non-clean area D. The clean area C and the non-clean area D are both enclosed by the glass outer wall. The clean area C is a closed structure, which is strictly forbidden to be opened. The clean area C places a higher requirement on the index of bacteria content in the air, and ensures that no bacteria can enter the clean area C when the blister pack is filled with the capsule, thus meeting the international hygienic standards for drug packaging.

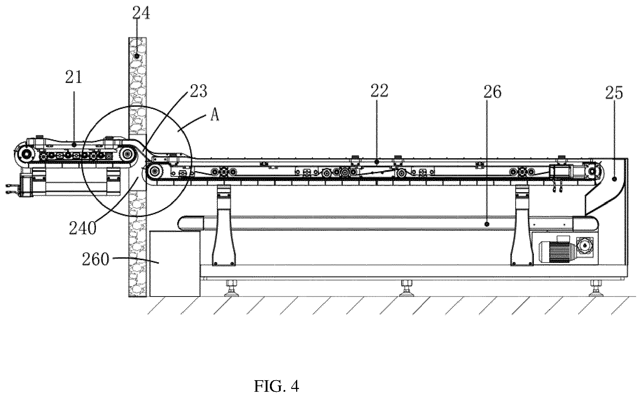

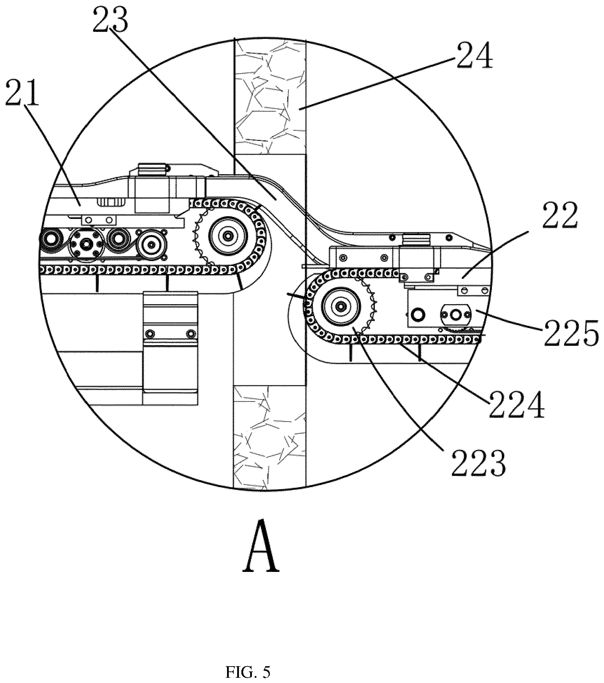

In the prior art, the existing discharging grid conveying device is an independent device and runs through the clean area C and the non-clean area D. The bioclean environment of the clean area C is guaranteed only by differential pressure. However, as described in the background, the independent discharging grid conveying device will still bring bacteria from the non-clean area D to the clean area C through the grid conveying belt of the discharging grid conveying device (because the grid conveying belt runs cyclically), thereby contaminating the clean area C. To solve the problem, as shown in FIG. 4 and FIG. 5, the discharging grid conveying device of the present invention includes two separate conveying devices. That is, the clean area grid conveying device 21 located in the clean area C and the non-clean area grid conveying device 22 located in the non-clean area D. In this way, the clean area grid conveying device 21 is entirely located in the clean area C, while the non-clean area grid conveying device 22 is entirely located in the non-clean area D. The clean area grid conveying device 21 and the non-clean area grid conveying device 22 complete the conveying process through separate grid conveyor belts. In order to achieve a continuous transmission between the clean area grid conveying device 21 and the non-clean area grid conveying device 22, the position of the clean area grid conveying device 21 is higher than the position of the non-clean area grid conveying device 22. The front end of the clean area grid conveying device 21 is connected to the back end of the non-clean area grid conveying device 22 through the slideway 23. The blister pack is transferred from the clean area grid conveying device 21 and slides to the non-clean area grid conveying device 22 through the slideway 23, thereby achieving the continuous transmission. The clean area C and the non-clean area D are separated by the partition wall 24, and the partition wall 24 has the window 240. The slideway 23 passes through the window 240. The partition wall 24 is located in this position to minimize the window 240 and minimize the possibility of bacteria entering the clean area through the window 240. Meanwhile, because the partition wall 24 does not interfere with the grid conveying devices on both sides, the grid conveying devices on both sides can be convenient for installation and maintenance. Through the above structure, the bacteria in the non-clean area D can be prevented from entering the clean area C through the conveyor belt. In addition, the air pressure in the clean area C is higher than the air pressure in the non-clean area D, so the bacteria in the non-clean area D is prevented from entering the clean area C through the air facilitated by the air pressure difference. Through these two aspects, the problem of bacteria from the non-clean area entering the clean area is completely solved.

In order to realize the sampling inspection, as shown in FIG. 4, according to the present invention, the return guide channel 25 is arranged in front of the non-clean area grid conveying device 22, the return conveying belt 26 is arranged under the return guide channel 25, and the sample collecting bucket 260 is arranged at the discharging end of the return conveying belt 26. In general, the blister pack on the non-clean area grid conveying device 22 is transferred to the feeding grid of the box carton machine through the manipulator for the box carton. When the sampling inspection of the blister pack is required, the blister pack transferring manipulator 5 stops sucking the blister pack to allow the blister pack to continue to move forward. After the blister pack reaches the back end, the blister pack falls down on the return conveying belt 26 through the return guide channel 25. Finally, the blister pack is transported into the sample collecting bucket 260 through the return conveying belt 26. In this way, samples can be taken from the sample collecting bucket 260 for inspection. This conveying system capable of return and inspection has two following functions: first, performing the leak detection of the blister pack in the non-clean area D; and second, supplying the feeding system for making the blister pack. The sample collecting bucket 260 is arranged next to the feeding system, which is conductive to trimming the blister pack and replenishing the material stock of the feeding system, so as to avoid the pause caused by the material replenishment and to maximize the production efficiency of the full-server high-speed blister pack machine integrated with the box carton machine.

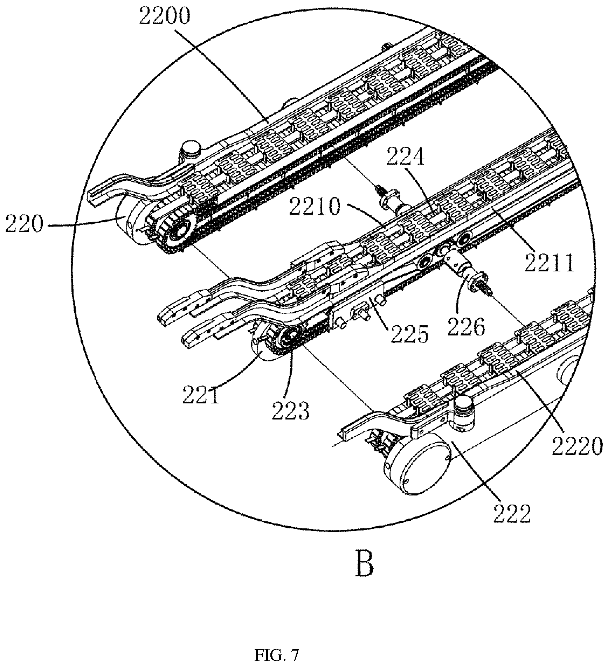

In order to improve the conveying efficiency, the discharging grid conveying device 2 has a plurality of conveying channels (the number of conveying channels of the clean area grid conveying device 21 is equal to the number of conveying channels of the non-clean area grid conveying device 22). As shown in FIG. 5 and FIG. 7, each conveying channel includes the grid conveying chain hook 224 (that is, the grid conveyor belt), the driving chain wheel and the driven chain wheel 223. The grid conveying chain hook 224 winds around the driving chain wheel and the driven chain wheel 223. The driving chain wheel is connected to the drive of the conveying power source 27. Driven by the conveying power source 27, the grid conveying chain hook 224 rotates, thereby driving the blister pack to integrate within the box carton machine.

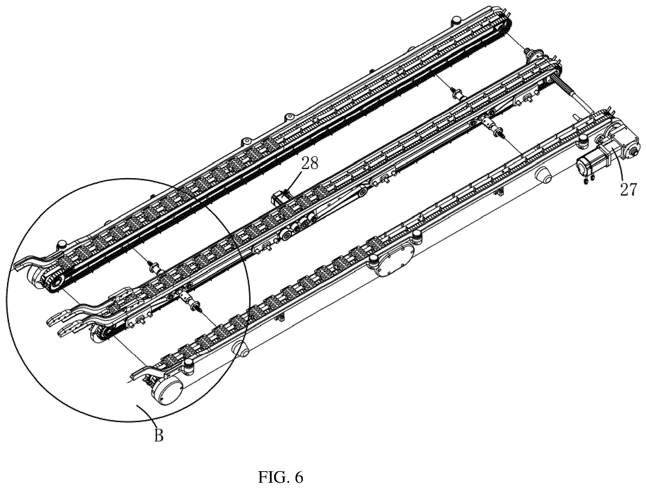

As shown in FIG. 6 and FIG.7, according to the present invention, the discharging grid conveying device 2 has three conveying channels. The driving chain wheel and the driven chain wheel of the inner conveying channel are installed on the inner housing 220. The driving chain wheel and the driven chain wheel 223 of the middle conveying channel are installed on the middle housing 221. The driving chain wheel and the driven chain wheel of the outer conveying channel are installed on the outer housing 222. In order to adjust the width of the conveying channels to adapt to the blister packs with different widths, according to the present invention, the adjusting screw rod 226 is installed on the middle housing 221, and two ends of the adjusting screw rod 226 are connected to the inner housing 220 and the outer housing 222 through screw threads, respectively. In addition, two partition mounting frames 225, capable of being moved and adjusted relative to each other, are installed on the left and right sides of the middle housing 221. The middle left partition 2210 and the middle right partition 2211 are installed on the partition mounting frames 225, the middle conveying channel is located between the middle left partition 2210 and the middle right partition 2211. When the width of the three conveying channels needs to be adjusted, for example, enlarging the distance between the three conveying channels, the distance between the two partition mounting frames 225 on the middle housing 221 is adjusted to to accommodate the channels. In this way, the distance between the middle left partition 2210 and the middle right partition 2211 becomes larger, widening the width of the middle conveying channel. Then, by rotating the adjusting screw rod 226 (which may be performed manually or driven by the motor 28), the inner housing 220 and the outer housing 222 on both sides are moved in the opposite direction, so that both the inner conveying channel and the outer conveying channel are widened. Of course, the width of the conveying channels is also narrowed by the above-mentioned adjustment method. This adjustment method is easy to operate and can adapt to transportation of blister packs with different widths.

In order to slightly adjust the width of the inner and outer conveying channels, according to the present invention, the inner partition 2200, which can be moved and adjusted left and right, is installed on the inner housing 220. The outer partition 2220, which can be moved and adjusted left and right, is installed on the outer housing 222. The inner housing 220 and the outer housing 222 can be adjusted within a large range of distance, while a fine adjustment can be performed on the inner partition 2200 and the outer partition 2220 manually, which can be very convenient.

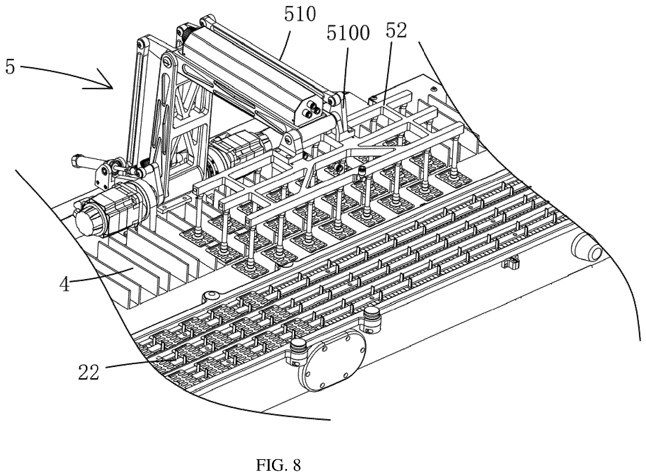

As shown in FIG. 8, the non-clean area grid conveying device 22 and the feeding grid conveying device 4 are arranged side by side. The blister pack transferring manipulator 5 is arranged on one side of the feeding grid conveying device 4. The blister pack transferring manipulator 5 is used to transfer the blister pack on the non-clean area grid conveying device 22, to the feeding grid conveying device 4 of the box carton machine 3, and then the blister pack is packaged into a box, along with the specification, through the box carton machine 3.

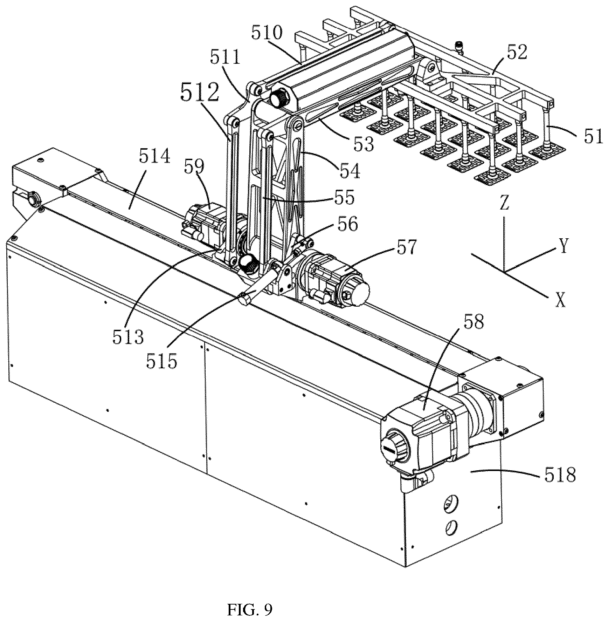

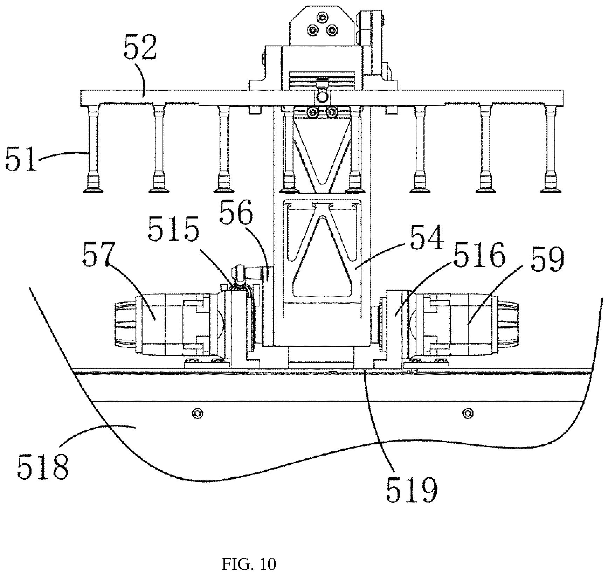

As shown in FIGS. 9-11, the blister pack transferring manipulator 5 includes the base 518, the suction nozzle 51, and the suction nozzle bracket 52. The suction nozzle 51 is installed on the suction nozzle bracket 52. Those are the same as the prior art but differ in the way in which the suction nozzle bracket 52 is driven to move forward and backward, left and right, and up and down.

In order to realize the above three movement modes of the suction nozzle bracket 52, according the present invention, the suction nozzle bracket 52 is hinged with the front end of the up and down lift arm 53 through the upper support 520 and the connecting shaft. The up and down lift arm 53 is hinged on the front and rear transferr arm 54. The lower end of the front and rear transfer arm 54 is rotatably installed on the sliding base 519 (installed on the sliding base 519 through the main shaft and the main shaft base 516). The up and down lift power source 57 and the front and rear transfer power source 59 are installed on the sliding base 59. The front and rear transfer power source 59 is connected to the drive of the front and rear transfer arm 54. The up and down lift power source 7 is connected to the drive of the lower end of the lift pull rod 55. The upper end of the lift pull rod 55 is hinged with the back end of the up and down lift arm 53. The slide rail arranged in the left and right direction is installed on the machine base 518 (the slide rail is not shown), and the sliding base 519 is arranged on the slide rail. The sliding base 519 is connected to the drive of the horizontal transfer power source 58 driving the sliding base 519 to move on the slide rail. In addition, the sliding base 519 is provided with the horizontal holding assembly to keep the suction nozzle bracket 52 horizontal.

The working principle of the blister pack transferring manipulator 5 is as follows: first, the manipulator sucks one or more rows of blister packs on the non-clean area grid conveying device 22 (according to packaging standard). Second, the horizontal transfer power source 58 drives the sliding base 519 to move, and the sliding base 519 carries the suction nozzle bracket 52 and the suction nozzle 51 to move quickly along the conveying direction of the feeding grid conveying device 4 (in the X-axis direction in FIG. 9). The horizontal movement of the sliding base 519 is faster than the conveying speed of the feeding grid conveying device 4. In the process of the horizontal movement, the front and rear transfer power source 59 drives the front and rear transfer arm 54 to rotate, that is, to rotate backward, so that the suction nozzle bracket 52 is moved towards the feeding grid conveying device 4 (in the Y-axis direction in FIG. 9). At the same time, the up and down lift power source 57 drives the lift pull rod 55 to move upward, so that the end of the up and down lift arm 53, connected to the lift pull rod 55, is moved upward, and the end of the up and down lift arm 53, connected to the suction nozzle bracket 52, is moved downward (in the Z-axis direction in FIG. 9), so that the suction nozzle 51 reaches directly above the feeding grid conveying device 4. Then the suction nozzle is deflated to make the row of blister packs fall onto the feeding grid conveying device 4. In the process of releasing the blister packs, the sliding base still tracks the feeding grid conveying device 4 and maintains the same moving speed and the same conveying direction as the feeding grid conveying device 4. By this way, the blister packs can be smoothly placed on the feeding grid conveying device 4, and continuous conveying can be achieved between the non-clean area grid conveying device 22 and the feeding grid conveying device 4, thereby greatly improving the packaging efficiency. If a plurality of rows of suction nozzles are arranged on the suction nozzle bracket 52, in order to realize the packaging of one blister pack per box, the suction nozzle bracket 52 needs to rise immediately (in the Z-axis direction in FIG. 9), after releasing one row, and at the same time, move quickly in the opposite direction of the feeding grid conveying device 4 (in the X-axis direction in FIG. 9), to reach the top of the empty space behind the feeding grid conveying device 4. Meanwhile, the position of the suction nozzle bracket 52 is adjusted (in the Y-axis direction in FIG. 9) to cause the other row of suction nozzles 51 to be directly above the empty space behind the feeding grid conveying device 4. Then the blister packs of this row are released by the suction nozzles 51. Of course, the stacking and the formation of the carton of (2-5) blister packs per box can also be accomplished by programming within the optimized transfer trajectory and least movement beat. According to the present invention, the manipulator is provided with three rows of suction nozzles 51 on the suction nozzle bracket 52. The three rows of suction nozzles 51 can basically satisfy the stacking and the formation of the carton of (1-5) blister packs per box.

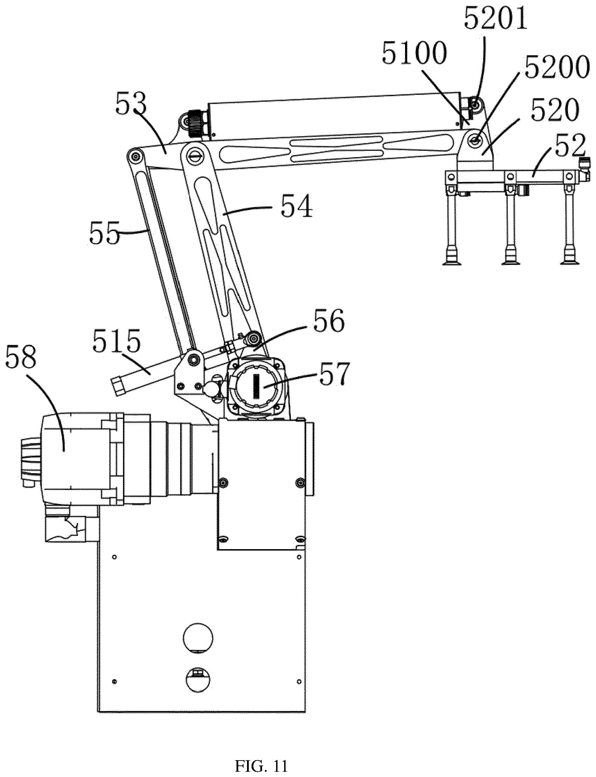

No matter how the suction nozzle bracket 52 is moved, the suction nozzle bracket 52 is always kept horizontal, and the suction nozzle bracket 52 is maintained horizontally through the horizontal holding assembly. According to the present invention, the horizontal holding assembly of the manipulator includes the horizontal transverse pull rod 510, the triangular cantilever 511, the horizontal vertical pull rod 512, the upper pull rod support 5100 and the lower pull rod support 513. The triangular cantilever 511 is hinged with the front and rear transfer arm 54, and one corner of the triangular cantilever 511 is hinged with the rear end of the horizontal transverse pull rod 510. The upper pull rod support 5100 is mounted on the suction nozzle bracket 52 (as shown in FIG. 8), and the front end of the horizontal transverse pull rod 510 is hinged with the upper pull rod support 5100. Another corner of the triangular cantilever 511 is hinged with the upper end of the horizontal vertical pull rod 512. The lower pull rod support 513 is installed on the sliding base 519, and the lower end of the horizontal vertical pull rod 512 is hinged with the lower pull rod support 513. Through the horizontal holding assembly, as shown in FIG. 11, the lower hinge point 5200 of the suction nozzle bracket 52 and the up and down lift arm 53 is always perpendicular to the upper hinge point 5201 of the upper pull rod support 5100 and the horizontal transverse pull rod 510 (If the two hinge points are not perpendicular, the direction is unchanged). Since both the lower hinge point 5200 and the upper hinge point 5201 are located on the suction nozzle bracket 52, the suction nozzle bracket 52 does not rotate and keeps horizontal, no matter whether it is moving up and down, or forward and backward.

As shown in FIG. 11, the connecting section between the up and down lift arm 53 and the suction nozzle bracket 52 is a long arm, and the connecting section between the up and down lift arm 53 and the lift pull rod 55 is a short arm. According to the lever principle, the lift pull rod 55 has to overcome a large upward pulling force to keep the suction nozzle bracket 52 in balance, while the lift pull rod 55 is connected to the drive of the up and down lift power source 57, so the pulling force to be overcome is transferred to the up and down lift power source 57, leading that the up and down lift power source 57 has to bear a greater load for this purpose. In order to reduce the load of the up and down lift power source 57, according to present invention, the up and down lift power source 57 is connected to the drive of the triangular connecting arm 56, where one corner of the triangular connecting arm 56 is hinged with the lower end of the lift pull rod 55. Another corner of the triangular connecting arm 56 is connected to the telescopic member 515 driving the lift pull rod 55 to pull down. Since the telescopic member 515 applies a backward pulling force to the corner of the triangular connecting arm 56, there exists a downward pulling force at the connecting end of the triangular connecting arm 56 and the lift pull rod 55, and the downward pulling force just reduces the upward pulling force to the lift pull rod 55, applied by the suction nozzle bracket 52 , thus reducing the load of the up and down lift power source 57, so that the up and down lift power source 57 has a longer service life. Of course, the telescopic member 515 here may be a tension spring or a supporting cylinder.

In order to make the sliding base 519 move quickly, according to the present invention, the base 518 of the manipulator is provided with the synchronous belt assembly. The synchronous belt assembly includes the driven synchronous pulley, the driving synchronous pulley and the synchronous belt 514. The synchronous belt 514 winds around the driven synchronous pulley and the driving synchronous pulley. The synchronous belt 514 is connected to the sliding base 519. The horizontal transfer power source 58 is connected to the drive of the driving synchronous pulley. The synchronous belt 514, driven by the horizontal transfer power source 58, drives the sliding base 519 to move quickly back and forth on the slide rail, so that the suction nozzle 51 and the suction nozzle bracket 52 can catch up with the non-clean area grid conveying device 22 and the feeding grid conveying device 4.

Finally, it is worth mentioning that the up and down lift power source 57, the front and rear transfer power source 59 and the horizontal transfer power source 58 of the manipulator of the present invention are all servo motor reducer combinations. The servo motor reducer combinations can accurately control the action of each mechanism, so as to complete the operation of sucking and releasing the blister pack with little error.

## Claims

1. A high-speed blister pack machine integrated with a box carton machine, comprising a blister packing machine (1) and a box carton machine (3); wherein the blister packing machine (1) is connected to a discharging grid conveying device (2) for a continuous transmission; the box carton machine (3) is connected to a feeding grid conveying device (4) for a continuous transmission; a continuous transmission between the discharging grid conveying device (2) and the feeding grid conveying device (4) is realized through a blister pack transferring manipulator (5); **characterised in that** the discharging grid conveying device (2) comprises a clean area grid conveying device (21) located in a clean area (C) and a non-clean area grid conveying device (22) located in a non-clean area (D); a position of the clean area grid conveying device (21) is higher than a position of the non-clean area grid conveying device (22); a front end of the clean area grid conveying device (21) and a rear end of the non-clean area grid conveying device (22) are connected to each other through a slideway (23) to achieve a continuous transmission; the clean area (C) and the non-clean area (D) are separated by a partition wall (24); the partition wall (24) has a window (240), and the slideway (23) passes through the window (240).

2. The high-speed blister pack machine integrated with the box carton machine according to claim 1, wherein, an air pressure of the clean area (C) is higher than an air pressure of the non-clean area (D).

3. The high-speed blister pack machine integrated with the box carton machine according to claim 1, wherein, a return guide channel (25) is arranged in front of the non-clean area grid conveying device (22), a return conveying belt (26) is arranged under the return guide channel (25), and a sample collecting bucket (260) is arranged at a discharging end of the return conveying belt (26).

4. The high-speed blister pack machine integrated with the box carton machine according to claim 1, wherein, the discharging grid conveying device (2) has a plurality of conveying channels, and each conveying channel comprises a grid conveying chain hook (224), a driving chain wheel and a driven chain wheel (223); the grid conveying chain hook (224) winds around the driving chain wheel and the driven chain wheel (223), and the driving chain wheel is connected to a drive of a conveying power source (27).

5. The high-speed blister pack machine integrated with the box carton machine according to claim 4, wherein, the discharging grid conveying device has three conveying channels, wherein a driving chain wheel and a driven chain wheel of an inner conveying channel are installed on an inner housing (220), a driving chain wheel and a driven chain wheel (223) of a middle conveying channel are installed on a middle housing (221), and a driving chain wheel and a driven chain wheel of an outer conveying channel are installed on an outer housing (222); an adjusting screw rod (226) is installed on the middle housing (221), and two ends of the adjusting screw rod (226) are connected to the inner housing (220) and the outer housing (222) through screw threads, respectively; two partition mounting frames (225) capable of being moved and adjusted relative to each other are installed on the left and right sides of the middle housing (221); a middle left partition (2210) and a middle right partition (2211) are installed on the partition mounting frames (225), and the middle conveying channel is located between the middle left partition (2210) and the middle right partition (2211).

6. The high-speed blister pack machine integrated with the box carton machine according to claim 1, wherein, the non-clean area grid conveying device (22) and the feeding grid conveying device (4) are arranged side by side; the blister pack transferring manipulator (5) is arranged on one side of the feeding grid conveying device (4), and the blister pack transferring manipulator (5) comprises a base (518), a suction nozzle (51) and a suction nozzle bracket (52); the suction nozzle bracket (52) is hinged with a front end of an up and down lift arm (53), and the up and down lift arm (53) is hinged on a front and rear transfer arm (54); a lower end of the front and rear transfer arm (54) is rotatably installed on a sliding base (519); an up and down lift power source (57) and a front and rear transfer power source (59) are installed on the sliding base (519); the front and rear transfer power source (59) is connected to a drive of the front and rear transfer arm (54); the up and down lift power source (57) is connected to the driver of the lower end of a lift pull rod (55); an upper end of the lift pull rod (55) is hinged with the back end of the up and down lift arm (53); a slide rail is installed on the machine base (518) in a left and right direction, and the sliding base (519) is arranged on the slide rail; the sliding base (519) is connected to a drive of a horizontal transfer power source (58) driving the sliding base (519) to horizontally move on the slide rail; the sliding base (519) is provided with a horizontal holding assembly to keep the suction nozzle bracket (52) horizontal.

7. The high-speed blister pack machine integrated with the box carton machine according to claim 6, wherein, the horizontal holding assembly comprises a horizontal transverse pull rod (510), a triangular cantilever (511), a horizontal vertical pull rod (512), an upper pull rod support (5100) and a lower pull rod support (513); the triangular cantilever (511) is hinged with the front and rear transfer arm (54), and one corner of the triangular cantilever (511) is hinged with the rear end of the horizontal transverse pull rod (510); the upper pull rod support (5100) is arranged on the suction nozzle bracket (52), and a front end of the horizontal transverse pull rod (510) is hinged with the upper pull rod support (5100); another corner of the triangular cantilever (511) is hinged with an upper end of the horizontal vertical pull rod (512); the lower pull rod support (513) is installed on the sliding base (519), and a lower end of the horizontal vertical pull rod (512) is hinged with the lower pull rod support (513).

8. The high-speed blister pack machine integrated with the box carton machine according to claim 6, wherein, the up and down lift power source (57) is connected to a drive of a triangular connecting arm (56), one corner of the triangular connecting arm (56) is hinged with the lower end of the lift pull rod (55), and another corner of the triangular connecting arm (56) is connected to a telescopic member (515) driving the lift pull rod (55) to pull down.

9. The high-speed blister pack machine integrated with the box carton machine according to claim 6, wherein, the base is provided with a synchronous belt assembly; the synchronous belt assembly comprises a driven synchronous pulley, a driving synchronous pulley and a synchronous belt (514); the synchronous belt (514) winds around the driven synchronous pulley and the driving synchronous pulley; the synchronous belt (514) is connected to the sliding base (519); the driving synchronous pulley is connected to a drive of the horizontal transfer power source (58).

10. The high-speed blister pack machine integrated with the box carton machine according to claim 6, wherein, the up and down lift power source (57), the front and rear transfer power source (59) and the horizontal transfer power source (58) are all servo motor reducer combinations.

## Patentansprüche

1. Eine Hochgeschwindigkeits-Blisterverpackungsmaschine, die mit einer Schachtelkartonmaschine integriert ist, umfassend eine Blisterverpackungsmaschine (1) und eine Schachtelkartonmaschine (3); wobei die Blisterverpackungsmaschine (1) mit einer Entladegitter-Fördervorrichtung (2) für eine kontinuierliche Übertragung verbunden ist; die Schachtelkartonmaschine (3) mit einer Zuführgitter-Fördereinrichtung (4) für eine kontinuierliche Übertragung verbunden ist; eine kontinuierliche Übertragung zwischen der Entladegitter-Fördereinrichtung (2) und der Zuführgitter-Fördereinrichtung (4) durch einen Blisterpackungsübergabe-Manipulator (5) realisiert ist;
**dadurch gekennzeichnet, dass**
die Entladegitter-Fördervorrichtung (2) eine Reinbereich-Gitterfördervorrichtung (21), die in einem Reinbereich (C) angeordnet ist, und eine Nicht-Reinbereich-Gitterfördervorrichtung (22), die in einem Nicht-Reinbereich (D) angeordnet ist, umfasst; eine Position der Reinbereichs-Gitterfördervorrichtung (21) höher ist als eine Position der Nicht-Reinbereichs-Gitterfördervorrichtung (22); ein vorderes Ende der Reinbereich-Gitterfördervorrichtung (21) und ein hinteres Ende der Nicht-Reinbereich-Gitterfördervorrichtung (22) durch eine Gleitbahn (23) miteinander verbunden sind, um eine kontinuierliche Übertragung zu erreichen; der Reinbereich (C) und der Nicht-Reinbereich (D) durch eine Trennwand (24) getrennt sind; die Trennwand (24) ein Fenster (240) aufweist, und die Gleitbahn (23) durch das Fenster (240) hindurchgeht.

2. Hochgeschwindigkeits-Blisterverpackungsmaschine, integriert mit der Schachtelkartonmaschine nach Anspruch 1, wobei ein Luftdruck des Reinbereichs (C) höher ist als ein Luftdruck des nicht Nicht-Reinbereichs (D).

3. Hochgeschwindigkeits-Blisterverpackungsmaschine, integriert mit der Schachtelkartonmaschine nach Anspruch 1, wobei ein Rückführführungskanal (25) vor der Nicht-Reinbereich-Gitterfördervorrichtung (22) angeordnet ist, ein Rückführförderband (26) unter dem Rückführungskanal (25) angeordnet ist und ein Probensammeleimer (260) an einem Entladungsende des Rückführförderbandes (26) angeordnet ist.

4. Hochgeschwindigkeits-Blisterverpackungsmaschine, integriert mit der Schachtelkartonmaschine nach Anspruch 1, wobei die Entladegitter-Fördervorrichtung (2) eine Vielzahl von Förderkanälen aufweist und jeder Förderkanal einen Gitterförderkettenhaken (224), ein antreibendes Kettenrad und ein angetriebenes Kettenrad (223) umfasst; der Gitterförderkettenhaken (224) sich um das antreibende Kettenrad und das angetriebene Kettenrad (223) wickelt, und das antreibende Kettenrad mit einem Antrieb einer Förderstromquelle (27) verbunden ist.

5. Hochgeschwindigkeits-Blisterpackungsmaschine, integriert mit der Schachtelkartonmaschine nach Anspruch 4, wobei die Entladegitter-Fördervorrichtung drei Förderkanäle aufweist, wobei ein antreibendes Kettenrad und ein angetriebenes Kettenrad eines inneren Förderkanals an einem inneren Gehäuse (220) installiert sind, ein antreibendes Kettenrad und ein angetriebenes Kettenrad (223) eines mittleren Förderkanals an einem mittleren Gehäuse (221) installiert sind, und ein antreibendes Kettenrad und ein angetriebenes Kettenrad eines äußeren Förderkanals an einem äußeren Gehäuse (222) installiert sind; eine Einstellspindelstange (226) an dem mittleren Gehäuse (221) installiert ist, und zwei Enden der Einstellspindelstange (226) mit dem inneren Gehäuse (220) bzw. dem äußeren Gehäuse (222) durch Schraubgewinden verbunden sind; zwei Trennwand-Befestigungsrahmen (225), die relativ zueinander bewegt und eingestellt werden können, an der linken und rechten Seite des mittleren Gehäuses (221) installiert sind; eine mittlere linke Trennwand (2210) und eine mittlere rechte Trennwand (2211) an den Trennwand-Befestigungsrahmen (225) installiert sind, und der mittlere Förderkanal zwischen der mittleren linken Trennwand (2210) und der mittleren rechten Trennwand (2211) angeordnet ist.

6. Hochgeschwindigkeits-Blisterpackungsmaschine, integriert mit der Schachtelkartonmaschine nach Anspruch 1, wobei die Nicht-Reinbereich-Gitterfördervorrichtung (22) und die Zuführgitter-Fördereinrichtung (4) nebeneinander angeordnet sind; der Blisterpackungsübergabe-Manipulator (5) auf einer Seite der Zuführgitterfördervorrichtung (4) angeordnet ist, und der Blisterpackungsübergabe-Manipulator (5) eine Basis (518), eine Saugdüse (51) und eine Saugdüsenhalterung (52) umfasst; die Saugdüsenhalterung (52) mit einem vorderen Ende eines Auf- und Abwärtshubarms (53) gelenkig verbunden ist, und der Auf- und Abwärtshubarm (53) an einem vorderen und hinteren Übertragungsarm(54) gelenkig verbunden ist; ein unteres Ende des vorderen und hinteren Übertragungsarms (54) drehbar an einer Gleitbasis (519) angebracht ist; eine Auf- und Abwärtshub-Energiequelle (57) und eine vordere und hintere Übertragungs-Energiequelle (59) auf der Gleitbasis (519) installiert sind; die vordere und hintere Übertragungs-Energiequelle (59) mit einem Antrieb des vorderen und hinteren Übertragungsarms (54) verbunden ist; die Auf- und Abwärtshub-Energiequelle (57) mit dem Antrieb des unteren Endes einer Hubzugstange (55) verbunden ist; ein oberes Ende der Hubzugstange (55) mit dem hinteren Ende des Auf- und Abwärtshubarms (53) gelenkig verbunden ist; eine Gleitschiene auf der Maschinenbasis (518) in einer linken und rechten Richtung installiert ist und die Gleitbasis (519) auf der Gleitschiene angeordnet ist; die Gleitbasis (519) mit einem Antrieb einer horizontalen Übertragungs-Energiequelle (58) verbunden ist, die die Gleitbasis (519) antreibt, um sich horizontal auf der Gleitschiene zu bewegen; die Gleitbasis (519) mit einer horizontalen Halteanordnung versehen ist, um die Saugdüsenhalterung (52) horizontal zu halten.

7. Hochgeschwindigkeits-Blisterpackungsmaschine, integriert mit der Schachtelkartonmaschine nach Anspruch 6, wobei die horizontale Haltebaugruppe eine horizontale Querzugstange (510), einen dreieckigen Ausleger (511), eine horizontale vertikale Zugstange (512), einen oberen Zugstangenträger (5100) und einen unteren Zugstangenträger (513) umfasst; der dreieckige Ausleger (511) gelenkig mit dem vorderen und hinteren Übertragungsarm(54) verbunden ist, und eine Ecke des dreieckigen Auslegers (511) gelenkig mit dem hinteren Ende der horizontalen Querzugstange (510) verbunden ist; der obere Zugstangenträger (5100) an der Saugdüsenhalterung (52) angeordnet ist, und ein vorderes Ende der horizontalen Querzugstange (510) mit dem oberen Zugstangenträger (5100) gelenkig verbunden ist; eine andere Ecke des dreieckigen Auslegers (511) mit einem oberen Ende der horizontalen vertikalen Zugstange (512) gelenkig verbunden ist; die untere Zugstangenhalterung (513) an der Gleitbasis (519) installiert ist, und ein unteres Ende der horizontalen vertikalen Zugstange (512) an der unteren Zugstangenhalterung (513) angelenkt ist.

8. Hochgeschwindigkeits-Blisterverpackungsmaschine, integriert mit der Kartonverpackungsmaschine nach Anspruch 6, wobei die Auf- und Abwärtshub-Energiequelle (57) mit einem Antrieb eines dreieckigen Verbindungsarms (56) verbunden ist, eine Ecke des dreieckigen Verbindungsarms (56) mit dem unteren Ende der Hubzugstange (55) gelenkig verbunden ist und eine andere Ecke des dreieckigen Verbindungsarms (56) mit einem Teleskopelement (515) verbunden ist, das die Hubzugstange (55) zum Herunterziehen antreibt.

9. Hochgeschwindigkeits-Blisterverpackungsmaschine, integriert mit der Kartonmaschine nach Anspruch 6, wobei die Basis mit einer Synchronriemenbaugruppe versehen ist; die Synchronriemenbaugruppe eine angetriebene Synchronriemenscheibe, eine antreibende Synchronriemenscheibe und ein Synchronband (514) umfasst; das Synchronband (514) um die angetriebene Synchronriemenscheibe und die antreibende Synchronriemenscheibe gewickelt ist; das Synchronband (514) mit der Gleitbasis (519) verbunden ist; die antreibende Synchronriemenscheibe mit einem Antrieb der horizontalen Übertragungs-Energiequelle (58) verbunden ist.

10. Die Hochgeschwindigkeits-Blisterpackungsmaschine, integriert mit der Schachtelkartonmaschine nach Anspruch 6, wobei die Aufwärts- und Abwärtshub-Energiequelle (57), die vordere und hintere Übertragungs-Energiequelle (59) und die horizontale Übertragungs-Energiequelle (58) alle Servomotor-Getriebekombinationen sind.

## Revendications

1. Machine d'emballage sous blister à grande vitesse intégrée à une machine de carton de boîte, comprenant une machine d'emballage sous blister (1) et une machine de carton de boîte (3) ; dans laquelle la machine d'emballage sous blister (1) est connectée à un dispositif de transport à grille de déchargement (2) pour une transmission continue ; la machine de carton de boîte (3) est connectée à un dispositif de transport à grille d'alimentation (4) pour une transmission continue ; une transmission continue entre le dispositif de transport à grille de déchargement (2) et le dispositif de transport à grille d'alimentation (4) est réalisée par l'intermédiaire d'un manipulateur de transfert d'emballage sous blister (5) ; **caractérisée en ce que** le dispositif de transport à grille de déchargement (2) comprend un dispositif de transport à grille de zone propre (21) situé dans une zone propre (C) et un dispositif de transport à grille de zone non propre (22) situé dans une zone non propre (D) ; une position du dispositif de transport à grille de zone propre (21) est plus élevée qu'une position du dispositif de transport à grille de zone non propre (22) ; une extrémité avant du dispositif de transport à grille de zone propre (21) et une extrémité arrière du dispositif de transport à grille de zone non propre (22) sont connectées l'une à l'autre par une glissière (23) pour obtenir une transmission continue ; la zone propre (C) et la zone non propre (D) sont séparées par une cloison (24) ; la cloison (24) comporte une fenêtre (240), et la glissière (23) passe à travers la fenêtre (240).

2. Machine d'emballage sous blister à grande vitesse intégrée à la machine de carton de boîte selon la revendication 1, dans laquelle, une pression d'air de la zone propre (C) est supérieure à une pression d'air de la zone non propre (D).

3. Machine d'emballage sous blister à grande vitesse intégrée à la machine de carton de boîte selon la revendication 1, dans laquelle, un canal de guidage de retour (25) est disposé devant le dispositif de transport à grille (22) de la zone non propre, une bande transporteuse de retour (26) est disposée sous le canal de guidage de retour (25), et un bac de collecte d'échantillons (260) est disposé à une extrémité de déchargement de la bande transporteuse de retour (26).

4. Machine d'emballage sous blister à grande vitesse intégrée à la machine de carton de boîte selon la revendication 1, dans laquelle, le dispositif de transport à grille de déchargement (2) présente une pluralité de canaux transporteurs, et chaque canal transporteur comprend un crochet de chaîne transporteuse à grille (224), une roue à chaîne d'entraînement et une roue à chaîne entraînée (223) ; le crochet de chaîne transporteuse à grille (224) s'enroule autour de la roue à chaîne d'entraînement et de la roue à chaîne entraînée (223), et la roue à chaîne d'entraînement est connectée à un entraînement d'une source de puissance de transport (27).

5. Machine d'emballage sous blister à grande vitesse intégrée à la machine de carton de boîte selon la revendication 4, dans laquelle, le dispositif de transport à grille de déchargement comporte trois canaux transporteurs, dans laquelle une roue à chaîne d'entraînement et une roue à chaîne entraînée d'un canal transporteur intérieur sont installées sur un boîtier intérieur (220), une roue à chaîne d'entraînement et une roue à chaîne entraînée (223) d'un canal transporteur central sont installées sur un boîtier central (221), et une roue à chaîne d'entraînement et une roue à chaîne entraînée d'un canal transporteur extérieure sont installées sur un boîtier extérieure (222), une tige filetée de réglage (226) est installée sur le boîtier central (221), et les deux extrémités de la tige filetée de réglage (226) sont connectées au boîtier intérieur (220) et au boîtier extérieur (222) par des filets de vis, respectivement ; deux cadres de montage de cloison (225) pouvant être déplacés et ajustés l'un par rapport à l'autre sont installés sur les côtés gauche et droit du boîtier central (221) ; une cloison médiane gauche (2210) et une cloison médiane droite (2211) sont installées sur les cadres de montage de cloison (225), et le canal transporteur médian est situé entre la cloison médiane gauche (2210) et la cloison médiane droite (2211).

6. Machine d'emballage sous blister à grande vitesse intégrée à la machine de carton de boîte selon la revendication 1, dans laquelle, le dispositif de transport à grille de zone non propre (22) et le dispositif de transport à grille d'alimentation (4) sont disposés côte à côte ; le manipulateur de transfert d'emballage sous blister (5) est disposé sur un côté du dispositif de transport à grille d'alimentation (4), et le manipulateur de transfert d'emballage sous blister (5) comprend une base (518), une buse d'aspiration (51) et un support de buse d'aspiration (52) ; le support de buse d'aspiration (52) est articulé avec une extrémité avant d'un bras de levage haut et bas (53), et le bras de levage haut et bas (53) est articulé sur un bras de transfert avant et arrière (54) ; une extrémité inférieure du bras de transfert avant et arrière (54) est installée de manière rotative sur une base coulissante (519) ; une source de puissance de levage de haut en bas (57) et une source de puissance de transfert avant et arrière (59) sont installées sur la base coulissante (519) ; la source de puissance de transfert avant et arrière (59) est connectée à un entraînement du bras de transfert avant et arrière (54) ; la source de puissance (57) pour le levage vers le haut et vers le bas est connectée à l'entraîneur de l'extrémité inférieure d'une tige de traction de levage (55) ; une extrémité supérieure de la tige de traction de levage (55) est articulée avec l'extrémité arrière du bras de levage haut et bas (53) ; un rail de glissement est installé sur la base de la machine (518) dans une direction gauche et droite, et la base coulissante (519) est disposée sur le rail de glissement ; la base coulissante (519) est connectée à un entraînement d'une source de puissance de transfert horizontal (58) entraînant la base coulissante (519) pour se déplacer horizontalement sur le rail de glissement ; la base coulissante (519) est pourvue d'un ensemble de maintien horizontal pour maintenir le support de buse d'aspiration (52) à l'horizontale.

7. Machine d'emballage sous blister à grande vitesse intégrée à la machine de carton de boîte selon la revendication 6, dans laquelle, l'ensemble de maintien horizontal comprend une tige de traction transversale horizontale (510), un cantilever triangulaire (511), une tige de traction verticale horizontale (512), un support de tige de traction supérieur (5100) et un support de tige de traction inférieur (513) ; le cantilever triangulaire (511) est articulé avec le bras de transfert avant et arrière (54), et un coin du cantilever triangulaire (511) est articulé avec l'extrémité arrière de la tige de traction transversale horizontale (510) ; le support de tige de traction supérieur (5100) est disposé sur le support de buse d'aspiration (52), et une extrémité avant de la tige de traction transversale horizontale (510) est articulée avec le support de tige de traction supérieur (5100) ; un autre coin du cantilever triangulaire (511) est articulé avec une extrémité supérieure de la tige de traction verticale horizontale (512) ; le support de tige de traction inférieur (513) est installé sur la base coulissante (519), et une extrémité inférieure de la tige de traction horizontale verticale (512) est articulée avec le support de tige de traction inférieur (513).

8. Machine d'emballage sous blister à grande vitesse intégrée à la machine de carton de boîte selon la revendication 6, dans laquelle, la source de puissance de levage vers le haut et vers le bas (57) est connectée à un entraînement d'un bras de connexion triangulaire (56), un coin du bras de connexion triangulaire (56) est articulé avec l'extrémité inférieure de la tige de traction de levage (55), et un autre coin du bras de liaison triangulaire (56) est connecté à un élément télescopique (515) entraînant la tige de traction de levage (55) vers le bas.

9. Machine d'emballage sous blister à grande vitesse intégrée à la machine de carton de boîte selon la revendication 6, dans laquelle, la base est pourvue d'un ensemble de bandes synchrones ; l'ensemble de bande synchrone comprend une poulie synchrone entraînée, une poulie synchrone d'entraînement et une bande synchrone (514) ; la bande synchrone (514) s'enroule autour de la poulie synchrone entraînée et de la poulie synchrone motrice ; la bande synchrone (514) est connectée à la base coulissante (519) ; la poulie synchrone d'entraînement est connectée à un entraînement de la source de puissance de transfert horizontal (58).

10. Machine d'emballage sous blister à grande vitesse intégrée à la machine de carton de boîte selon la revendication 6, dans laquelle, la source de puissance de levage vers le haut et vers le bas (57), la source de puissance de transfert avant et arrière (59) et la source de puissance de transfert horizontal (58) sont toutes des combinaisons de servomoteurs-réducteurs.
